# EUROPÄISCHE PATENTSCHRIFT

(11) **EP 1 881 413 B1**
(45) Veröffentlichungstag und Bekanntmachung des Hinweises auf die Patenterteilung: **01.07.2009**
(21) Anmeldenummer: 06015141.2
(22) Anmeldetag: 20.07.2006
(51) Int. Cl.: G06F 13/38, H04L 1/22, G05B 19/10

(54) **Kommunikationssystem für den flexiblen Einsatz in unterschiedlichen Einsatzfällen der Automatisierungstechnik**
Communication system for flexible use in different automation technology applications
Système de communication pour l'utilisation flexible dans différents cas d'utilisation de la technique d'automatisation

(43) Veröffentlichungstag der Anmeldung: 23.01.2008
(73) Patentinhaber: SIEMENS AKTIENGESELLSCHAFT, 80333 München (DE)
(72) Erfinder: Grosser, Stefan, 92253 Schnaittenbach (DE); Maul, Jürgen, 92237 Sulzbach-Rosenberg (DE); Tretter, Albert, 92712 Pirk (DE)

(56) Entgegenhaltungen:
- US-A- 4 833 605
- US-A1- 2003 039 243
- US-B1- 6 636 478

## Beschreibung

Die Erfindung betrifft ein Modul zur Erweiterung eines Zentralmoduls eines Automatisierungssystems, wobei der Datentransfer zwischen Modul und Zentralmodul mittels eines seriellen Kommunikationssystems mit Punkt-zu-Punkt-Verbindungen in einem Daisy-Chain- oder mittels eines parallelen Bussystems im Sinne eines Backplane-Aufbaus erfolgt und wobei das Modul in einer Bitübertragungsschicht hierfür mindestens zwei Sender und mindestens zwei Empfänger aufweist.

Die Erfindung betrifft ferner ein Kommunikationssystem eines Automatisierungssystems mit einem durch mindestens ein Modul erweitertes Zentralmodul, wobei der Datentransfer zwischen Modul und Zentralmodul seriell mittels Punkt-zu-Punkt-Verbindungen in einem Daisy-Chain- oder mittels eines parallelen Bussystems im Sinne eines Backplane-Aufbaus erfolgt.

Ein derartiges Modul bzw. Kommunikationssystem kommt insbesondere in der Automatisierungstechnik zum Einsatz, in der je nach Einsatzfeld des Automatisierungssystems bzw. eines Remote-I/O-Systems unterschiedliche Aspekte der Kommunikation im Fokus stehen. Diese sind z.B. Highspeed (Geschwindigkeit) für Spezialfunktionen in der Steuerungs- und Regelungstechnik, Deterministik / Taktsynchronität für Antriebstechnik und Regelungen, Verfügbarkeit bei hochverfügbaren bzw. fehlertoleranten Systemen, Hot-plug-in (Ziehen und Stecken) insbesondere bei Systemen in der Prozessindustrie, Handhabung / Kosten beispielsweise in der Fertigungstechnik, Kommunikationsdurchsatz insbesondere beim Routing von PROFIBUS/Ethernet auf Kommunikationsmodule, Einsatz in dezentraler Peripherie für Remote-I/O und Erweiterbarkeit. Heutige Systeme sind relativ starr auf einen oder mehrere Aspekte optimiert. Dabei unterstützen die Systeme die typischen Anforderungen der Automatisierungstechnik wie beispielsweise zyklischen I/O-Transfer, kurze Reaktionszeiten zwischen Zentralmodul und dem sie erweiternden zumindest einen Modul bzw. zwischen dem Modul und dem Zentralmodul für beispielsweise Alarmmeldungen, Takt- und Uhrzeitsynchronisation und hohe Verfügbarkeit. Die Datenübertragung erfolgt nach deterministischen Gesichtspunkten unter Berücksichtigung definierter Reaktionszeiten und wird in der Regel durch das Zentralmodul initiiert.

Bisherige Lösungen sind beispielsweise serielle Bussysteme für die Nutzung als lokale (Board-to-Board-) Kommunikationssysteme im Sinne eines Daisy-Chain-Aufbaus oder parallele Bussysteme im Sinne eines Backplane-Aufbaus. Bei seriellen Bussystemen ist eine einfache Erweiterung durch Zustecken von Modulen möglich und sie haben eine hohe Flexibilität bzgl. der Aufbautechnik ("selbstaufbauende Varianten"). Weiter zeichnen sich diese Systeme durch einen geringen Platzbedarf (bzgl. der Größe der Stecker, Mechanik) und einen geringen Leistungsbedarf (bzgl. der Anzahl der Treiber, ...) aus und sind daher als Low-cost-Varianten erhältlich, haben allerdings eine relativ geringe Performance (Seriellübertragung mit Bitraten < 10 MBd) und relativ hohe Reaktionszeiten. Demgegenüber haben parallele Systeme wie beispielsweise VME-Bus oder PCI eine relativ hohe Performance (Parallelübertragung 16 / 32 Bit), erkaufen sich diese jedoch mit relativ hohen Kosten (vielpolige Stecker, komplexe Backplanes), einen hohen Platzbedarf (Größe der Stecker, Mechanik, ASICs, EMV-Maßnahmen), eine limitierte Übertragungsrate (Übersprechen, Treibertechnologien, Busstruktur), eine geringe Datensicherheit (Datensicherungsmechanismen), einen hohen Leistungsbedarf (Anzahl der Treiber, ...) und eine geringe Flexibilität bzgl. der Aufbautechnik (aufgrund fester Backplane-Aufbauten).

Der Erfindung liegt die Aufgabe zugrunde, ein Modul für ein Kommunikationssystem innerhalb eines Automatisierungssystems anzugeben, das flexibel und einfach an das jeweilige Einsatzfeld angepasst werden kann. Der Erfindung liegt ferner die Aufgabe zugrunde, ein flexibles und skalierbares Kommunikationssystem für den Datentransfer zwischen einem Zentralmodul / einer CPU und zumindest einem Modul im Sinne einer modularen Erweiterung des Zentralmoduls / der CPU anzugeben.

Diese Aufgabe wird bei einem Modul der eingangs genannten Art dadurch gelöst, dass die Konfiguration der Bitübertragungsschicht zur Anpassung an ein vorgebbares Einsatzfeld des Moduls, insbesondere bezüglich Geschwindigkeit, Verfügbarkeit und/oder Erweiterbarkeit, parametrierbar ist. Diese Aufgabe wird ferner bei einem Kommunikationssystem der eingangs genannten Art dadurch gelöst, dass als Modul ein Modul gemäß der Erfindung vorgesehen ist.

Das beschriebene Kommunikationssystem kann durch Parametrierung der Module und/oder durch Zustecken von Systemkomponenten, wie z.B. eines Hubs (aktiver Signalverteiler) oder Terminals (passiver Signalverteiler), auf das jeweilige Einsatzfeld optimiert werden, d.h. die für die jeweiligen Einsatzfelder benötigten Grundfunktionalitäten sind in allen Modulen (Kommunikationsanschaltung) vorhanden und können entsprechend aktiviert werden. Dadurch ergibt sich sowohl für den Endnutzer als auch für den Hersteller eine höchstmögliche Flexibilität. So lässt sich beispielsweise alleine durch Zustecken einer Hub-Komponente die Verfügbarkeit deutlich erhöhen, was natürlich insbesondere bei hochverfügbaren Systemen wichtig ist.

Verschiedene Grundkonfigurationen sind in den Figuren näher erläutert. Aufgrund der dargestellten vielseitigen Einsatzmöglichkeiten ist eine weitgehende Skalierung in Bezug auf Performance, Funktionalität und Kosten möglich.

Im Kern handelt es sich um ein serielles Kommunikationssystem mit Punkt-zu-Punkt-Verbindungen zwischen den Modulen, wobei die Datenübertragung nach dem Telegrammverfahren stattfindet. Jedes Modul verfügt über zumindest zwei Sende/Empfangseinrichtungen ("Ports"). Die Punkt-zu-Punkt- (Portzu-Port-) Beziehungen können entsprechend flexibel genutzt, d.h. konfiguriert, werden. So müssen beispielsweise bei einem Umstieg von einem Daisy-Chain-Aufbau auf einen Backplane-Aufbau, d.h. ein Rack-System, nur die Terminals getauscht werden. Oder es können im Zuge von Erweiterungen mehrere Trägersysteme für Module zu einem Systemaufbau kombiniert werden. Die erfindungsgemäßen Module können dabei ohne Hardware- oder Firmware-Änderungen in den verschiedenen Topologie-Optionen eingesetzt werden. Somit sind keine Sonderentwicklungen für die unterschiedlichen Varianten erforderlich.

Durch die parametrierbare Konfiguration der Bitübertragungsschicht ergeben sich folgende Vorteile des erfindungsgemäßen Kommunikationssystems: 1. Skalierbarkeit in Bezug auf die Funktionalität, d.h. die Funktionalitäten können auf den jeweiligen Anwendungsfall adaptiert werden (unterschiedliche Topologie-Optionen in unterschiedlichen Anwendungsfällen, Kompatibilität), 2. Skalierbarkeit in Bezug auf die Kosten, d.h. die identischen Module (und Trägersysteme) sind einsetzbar von einem Low-cost-System bis zu einem High-performance-System; die Skalierung erfolgt durch die Leistungsfähigkeit des Zentralmoduls und des Terminals, 3. Skalierbarkeit in Bezug auf konstruktive Aufbautechnik, d.h. mit praktisch einer Aufbautechnik (Module, Trägersysteme, Terminal) kann das ganze Funktionsspektrum abgedeckt werden, wofür bei den bekannten Lösungen unterschiedliche Aufbautechniken erforderlich sind, und 4. Kombination der Vorteile heutiger Ansätze (parallel / seriell) zu einem "neuen Kommunikationssystem", welches folgende Vorteile bietet: Hohe Performance bzw. Parallelität möglich, Low-cost-Varianten möglich, hohe Flexibilität bzgl. der Aufbautechnik (Daisy-Chain, Backplane), Skalierbarkeit, geringe Verlustleistung, geringer Platzbedarf, hohe Datensicherheit, hohe Deterministik (Reaktionszeiten) und Adaption auf wichtige Anforderungen der Automatisierungstechnik wie kurze Alarmreaktionszeiten, Takt-/Uhrzeitsynchronität usw.

In einer vorteilhaften Ausführungsform weist das Modul Mittel zur Parametrierung der Konfiguration der Bitübertragungsschicht über Hardware-Einstellungen auf. Dies kann z.B. über Pins erfolgen, die in der Backplane entsprechend belegt sind.

In einer weiteren vorteilhaften Ausführungsform weist das Modul Mittel zur Parametrierung der Konfiguration der Bitübertragungsschicht über Software-Einstellungen auf. Somit kann die zu verwendende Konfiguration über das Kommunikationssystem übertragen werden.

In einer weiteren vorteilhaften Ausführungsform weist das Modul Mittel zur automatischen Erkennung der Topologievariante Daisy-Chain- oder Backplane-Aufbau und entsprechender Parametrierung der Konfiguration der Bitübertragungsschicht auf. Damit ist ein Zutun eines Anwenders nicht erforderlich.

Im Folgenden wird die Erfindung anhand der in den Figuren dargestellten Ausführungsbeispiele näher beschrieben und erläutert. Es zeigen:
- FIG 1: eine schematische Darstellung eines erfindungsgemäßen Moduls,
- FIG 2: das Modul aus Fig 1 mit einer Konfiguration für einen Daisy-Chain-Aufbau,
- FIG 3: das Modul aus Fig 1 mit einer Konfiguration für einen Backplane-Aufbau in der Option "Erhöhte Verfügbarkeit",
- FIG 4: das Modul aus Fig 1 mit einer Konfiguration für einen Backplane-Aufbau in der Option "Highspeed Slave"
- FIG 5: eine Darstellung der Systemtopologie eines erfindungsgemäßen Kommunikationssystems in einem Daisy-Chain-Aufbau,
- FIG 6: eine Darstellung der Kommunikationstopologie des Kommunikationssystems aus Fig 5,
- FIG 7: eine Darstellung der Systemtopologie eines erfindungsgemäßen Kommunikationssystems in einem Backplane-Aufbau mit einem Hub,
- FIG 8: eine Darstellung der Kommunikationstopologie des Kommunikationssystems aus Fig 7,
- FIG 9: eine Darstellung der Systemtopologie des Kommunikationssystems aus Fig 7 mit einem zweiten Hub,
- FIG 10: eine Darstellung der Kommunikationstopologie des Kommunikationssystems aus Fig 9,
- FIG 11: eine Darstellung der Systemtopologie eines erfindungsgemäßen Kommunikationssystems in einem Backplane-Aufbau mit einem "Highspeed Master",
- FIG 12: eine Darstellung der Kommunikationstopologie des Kommunikationssystems aus Fig 11,
- FIG 13: eine Darstellung der Systemtopologie eines erfindungsgemäßen Kommunikationssystems in einer um zwei Trägersysteme erweiterten Ausführungsform,
- FIG 14: eine Darstellung der Kommunikationstopologie des Kommunikationssystems aus Fig 13.

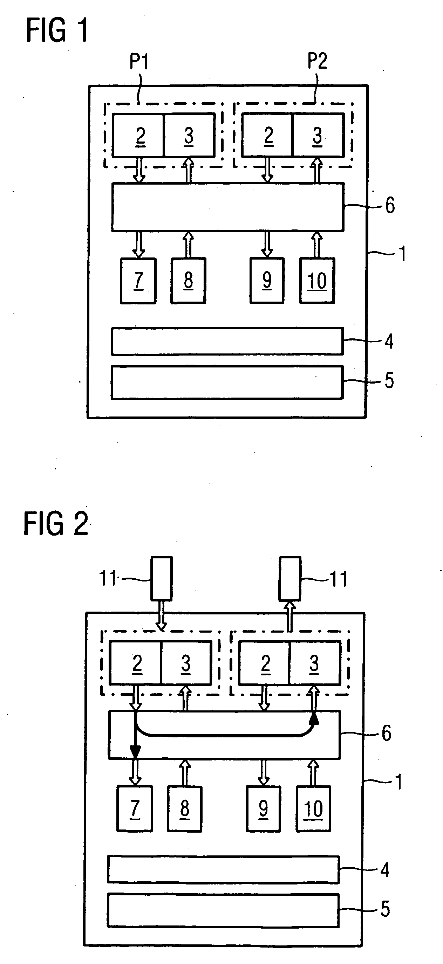

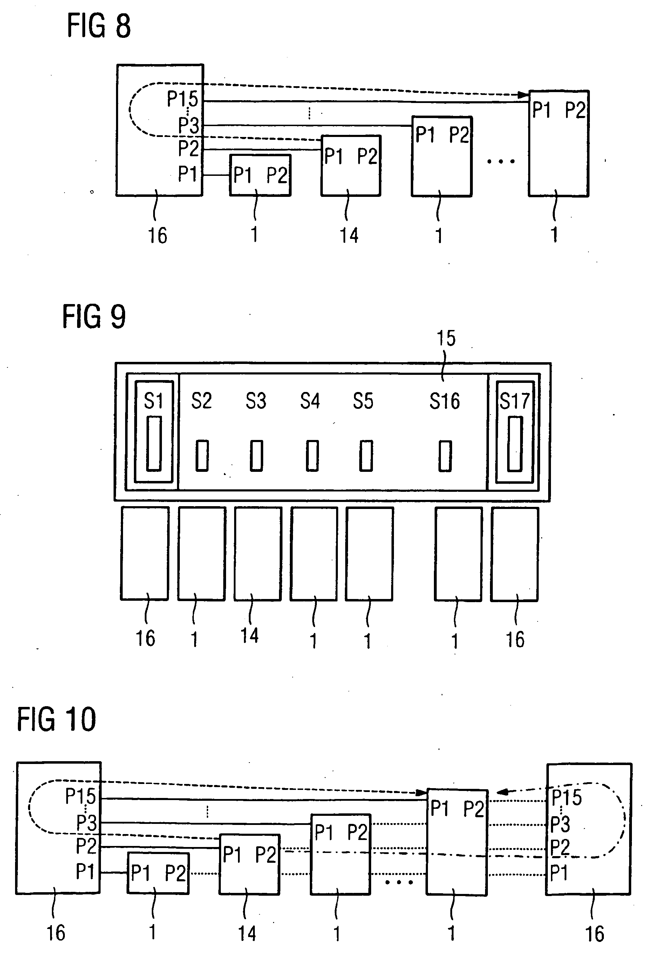

Fig 1 zeigt eine schematische Darstellung eines erfindungsgemäßen Moduls 1. Das Modul 1 weist zwei Empfänger 2 und zwei Sender 3 auf, die zu zwei Ports P1, P2 genannten Sende/Empfangseinrichtungen zusammengefasst sind. Sender 3 bzw. Empfänger 2 übernehmen dabei als Schnittstellen zum seriellen Kommunikationssystem die Funktion eines "Serializers" bzw. "Deserializers". An den Ports P1, P2 empfangene Telegramme werden von der Bitübertragungsschicht je nach Konfiguration unterschiedlich weiterverarbeitet, bevor sie den nachfolgenden Schichten 4 und schließlich der Modul-Applikation 5 zur Verfügung stehen. Die nachfolgenden Schichten 4 bestehen dabei nach dem OSI-Modell (Open Systems Interconnection Reference Model) aus: Sicherungsschicht, Vermittlungsschicht, Transportschicht, Sitzungsschicht, Darstellungsschicht und Anwendungsschicht. Dabei hat die Konfiguration der Bitübertragungsschicht gemäß der Erfindung mit einer Ausnahme keinen Einfluss auf die nachfolgenden Kommunikationsschichten 4 bzw. der Applikationssoftware 5. Diese Ausnahme betrifft die Option "Dual-Bus-System", die unter Fig 10 näher erläutert wird. Grundsätzlich wird jedes an einem der Ports P1, P2 empfangene Telegramm in einem ersten Empfangsspeicher 7 (REC_BUF) der Sicherungsschicht, Schicht 2 im OSI-Modell, aus den nachfolgenden Schichten 4 zur Verfügung gestellt. Zudem kann die Sicherungsschicht einem ersten Sendespeicher 8 (SEND_BUF) übergebene Telegramme an einen oder beide der Ports P1, P2 senden. Das Modul 1 weist ferner einen zweiten Empfangsspeicher 9 und einen zweiten Sendespeicher 10 auf, die aber wiederum nur für die Option "Dual-Bus-System" verwendet werden. Die jeweils spezifische Art der Weiterverarbeitung von zu sendenden oder empfangenen Telegrammen wird dabei durch das Konfigurations-File der Bitübertragungsschicht 6 festgelegt.

Das dargestellte Modul 1 kann flexibel über Hardware-Einstellungen wie beispielsweise Pins, die in der Backplane entsprechend belegt sind, bzw. Software-Einstellungen, d.h. Änderungen im Konfigurations-File der Bitübertragungsschicht 6, an die jeweiligen Systemanforderungen für das jeweilige Einsatzfeld angepasst werden. So kann das Modul 1 ohne Hard- oder Firmware-Änderungen in den verschiedenen Topologie-Optionen, die in den folgenden Figuren dargestellt sind, eingesetzt werden, ohne dass Sonderentwicklungen für diese Varianten erforderlich wären. Dabei wird die Bitübertragungsschicht gemäß den zu den folgenden Figuren gemachten Ausführungen parametriert. Die Erkennung der Topologie-Variante Daisy-Chain-Aufbau oder Backplane-Aufbau kann dabei ohne Zutun eines Anwenders automatisch erfolgen.

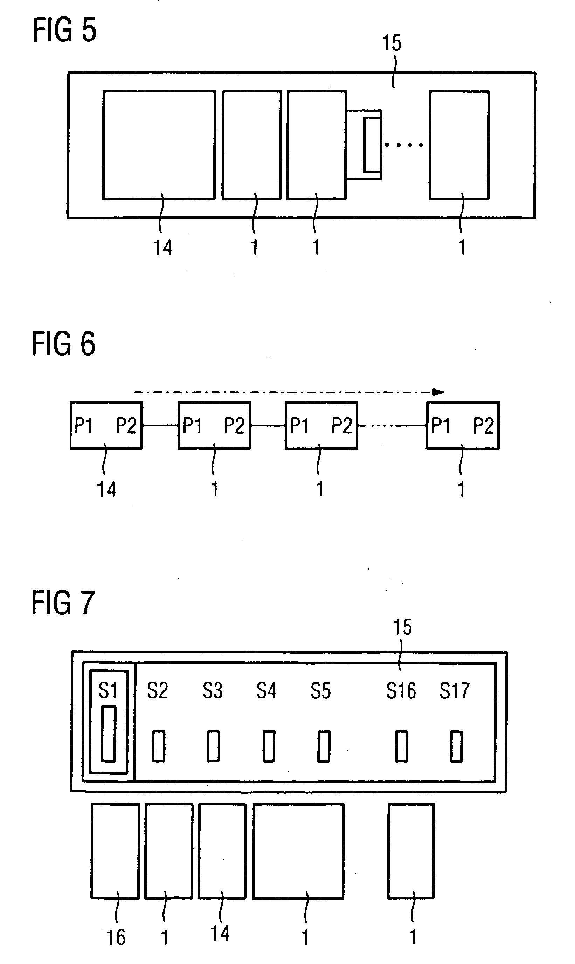

Fig 2 zeigt das Modul 1 aus Fig 1, wobei das Konfigurations-File der Bitübertragungsschicht 6 für einen Daisy-Chain-Aufbau parametriert ist, vgl. Fig 5 und 6. Dabei werden generell alle an einem Port, in der Figur P1, ankommenden Telegramme 11 im ersten Empfangsspeicher 7 empfangen und gleichzeitig am anderen Port, in der Figur P2, wieder gesendet. Jedes Telegramm 11 besteht neben den sich aus Zeichen zusammensetzenden Daten aus einem speziellen Startzeichen (SD, "StartDelimiter") und einem speziellen Endezeichen (ED, "End-Delimiter"). Die Latenzzeit für die Durchleitung des Telegramms 11 vom empfangenden Port P1 zum sendenden Port P2 ist auf ein Minimum reduziert (typischerweise zwei bis drei Zeichen). Nach dem Empfang des Startzeichens des Telegramms 11 wird praktisch sofort damit begonnen, die empfangenen Zeichen weiterzusenden, bis die Durchleitung durch den Empfang des Endezeichens beendet wird. Generell erfolgt die Durchleitung in beide Richtungen. Zudem können im ersten Sendespeicher 8 übergebene Telegramme 11 über die entsprechenden Ports P1, P2 gesendet werden.

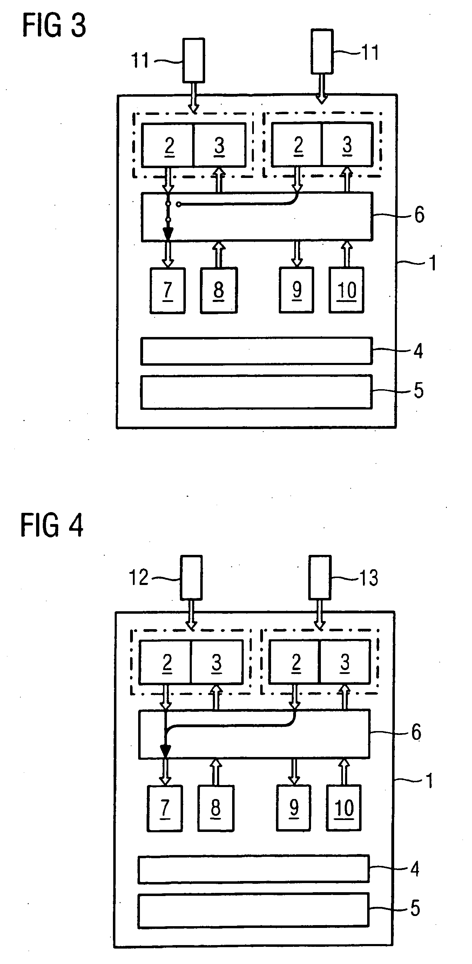

Fig 3 zeigt das Modul 1 aus Fig 1, wobei das Konfigurations-File der Bitübertragungsschicht 6 für einen Backplane-Aufbau in der Option "Erhöhte Verfügbarkeit" parametriert ist. Generell werden bei einem Backplane-Aufbau, d.h. einem Racksystem, alle an jeweils einem Port P1, P2 empfangenen Telegramme 11 im ersten Empfangsspeicher 7 empfangen und nicht am jeweils anderen Port P2, P1 weitergeleitet. Zudem können im ersten Sendespeicher 8 übergebene Telegramme 11 über die entsprechenden Ports P1, P2 gesendet werden. In der Option "Erhöhte Verfügbarkeit" weist das Kommunikationssystem zwei Hub-Module auf und die Kommunikation erfolgt zweikanalig über beide Hubs, vgl. Fig 9 und 10. Jeder Kommunikationsauftrag erfolgt parallel über beide Kanäle (Ports P1, P2) und wird am Zielmodul entsprechend an beiden Ports P1, P2 empfangen.

Wird am Port P1 ein Startzeichen empfangen, erfolgt der Empfang des Telegramms 11 ausschließlich von diesem Port P1, bis ein Endezeichen empfangen wird. Ein etwas später eintreffendes Telegramm 11 (redundantes Telegramm) wird damit verworfen. Bei gleichzeitigem Eintreffen des zweiten Telegramms 11 an Port P2 erfolgt eine Priorisierung, z.B. Kanal 1 (Port P1) hat Vorrang. Da in der Option "Erhöhte Verfügbarkeit" Telegramme 11 parallel über zwei Wege gesendet werden, kann der Ausfall eines Weges überbrückt bzw. detektiert werden. Zudem können im ersten Sendespeicher 8 übergebene Telegramme 11 über die Ports P1 und P2 gesendet werden.

Fig 4 zeigt das Modul 1 aus Fig 1, wobei das Konfigurations-File der Bitübertragungsschicht 6 für einen Backplane-Aufbau in der Option "Highspeed Slave" parametriert ist. In dieser Option wird durch den Einsatz eines zweiten Hubs im Kommunikationssystem ein zweiter Kommunikationskanal zur Verdoppelung der Bandbreite bereitgestellt. Dabei wird ein zu sendendes Telegramm in eine erste Telegrammhälfte 12 und eine zweite Telegrammhälfte 13 gesplittet, wobei beispielsweise die erste Telegrammhälfte 12 über Kanal 1 und die zweite Telegrammhälfte 13 über Kanal 2 gesendet wird. Die Kennzeichnung eines gesplitteten Telegramms 12, 13 erfolgt über ein spezielles Startzeichen. Im Modul 1 werden die an den beiden Ports P1 und P2 empfangenen Telegrammhälften 12 und 13 durch das entsprechend parametrierte Konfigurations-File der Bitübertragungsschicht 6 wieder zu einem Telegramm zusammengesetzt und im ersten Empfangsspeicher den nachfolgenden Schichten 4 und der Modul-Applikation 5 zur Verfügung gestellt. Zudem können im ersten Sendespeicher 8 übergebene Telegramme, jeweils aufgeteilt in zwei Teiltelegramme 12 und 13, über beide Ports P1 und P2 versendet werden.

Fig 5 zeigt eine Darstellung der Systemtopologie eines erfindungsgemäßen Kommunikationssystems in einem Daisy-Chain-Aufbau. Hierbei werden Module 1 und die Zentraleinheit 14 über einfache passive Elemente (Terminals) auf einem Trägersystem 15 befestigt. Die Erweiterung erfolgt dabei modulgranular, d.h. die mechanische Ausdehnung des Ausbaus ist ausschließlich durch die Anzahl der zu verbindenden Module 1 bestimmt. Dies ist eine Low-cost-Variante mit entsprechenden Funktionseinschränkungen wie z.B. keine Möglichkeit des Ziehens oder Steckens von Modulen 1 im laufenden Betrieb bzw. eine eingeschränkte Performance.

Fig 6 zeigt eine Darstellung der Kommunikationstopologie des Kommunikationssystems aus Fig 5. Kommunikationstechnisch handelt es sich dabei um eine Linienstruktur. Im dargestellten Beispiel wird, symbolisiert durch den Pfeil, eine Anfrage von der Zentraleinheit 14 zum Modul 1 ganz rechts gesendet, wobei die dazwischenliegenden Module 1 den Request weiterleiten, d.h. am Port P1 empfangen und zum Port P2 durchleiten, der mit dem Port P1 des Nachbarmoduls verbunden ist.

Fig 7 zeigt eine Darstellung der Systemtopologie eines erfindungsgemäßen Kommunikationssystems in einem Backplane-Aufbau mit einem Hub 16. Bei einem derartigen Racksystem werden die Module 1, Zentraleinheit / CPU 14 und Hub 16 über ein passives Element (Backplane), welches n Einbauplätze zur Verfügung stellt, auf dem Trägersystem 15 befestigt. Die Erweiterungsfähigkeit wird dabei durch die Ausführung der Backplane bestimmt. Das Trägersystem 15 / Backplane ist dabei rein passiv ausgeführt. Speziell im Racksystem können je nach Anwendungsfall zusätzliche Optionen wahrgenommen werden.

Fig 8 zeigt eine Darstellung der Kommunikationstopologie des Kommunikationssystems aus Fig 7. Kommunikationstechnisch handelt es sich dabei um eine Sternstruktur. Die Kommunikationsinfrastruktur (Hub-Funktionalität / Stern) wird durch ein eigenständiges Hub-Modul 16 wahrgenommen. Mit diesem, das mehrere Ports, im Beispiel P1 bis P16, aufweist, sind die Module 1 und die Zentraleinheit 14 jeweils über ihren Port P1 verbunden. Ein Request (Anfrage) von der Zentraleinheit 14 an das Modul 1 ganz rechts in der Figur, symbolisiert durch den Pfeil, wird über den Hub 16 an das betreffende Modul 1 weitergeleitet. In der Darstellung ist die CPU 14 mit Port P3 des Hub-Moduls 16 und das angefragte Modul 1 mit Port P16 des Hubs 16 verbunden.

Fig 9 zeigt eine Darstellung der Systemtopologie des Kommunikationssystems aus Fig 7 mit einem zweiten Hub 16, wodurch ein zweiter physikalischer Kommunikationskanal bereitgestellt wird. Hierdurch werden verschiedene Optionen ermöglicht, die unter Fig 10 näher erläutert werden.

Fig 10 zeigt eine Darstellung der Kommunikationstopologie des Kommunikationssystems aus Fig 9. Durch die beiden Hub-Module 16 stehen der CPU 14 zwei Kommunikationswege zum rechten Modul 1 zur Verfügung, wie durch die eingezeichneten Pfeile symbolisiert wird. Diese können für verschiedene Einsatzfelder in unterschiedlichen Optionen genutzt werden, wobei für alle Optionen die gleiche Backplane verwendet werden kann. Die Auswahl der verwendeten Variante erfolgt ausschließlich durch Parametrierung des Masters bzw. der Slaves. Dabei enthält die Backplane (das einzige nicht im laufenden Betrieb tauschbare Element in der Option "Erhöhte Verfügbarkeit") keinerlei aktive Elemente und weist daher eine besonders hohe Verfügbarkeit auf.
- "Erhöhte Verfügbarkeit"
   Durch Hinzufügen des zweiten Hub-Moduls 16 wird eine Redundierung des physikalischen Kommunikationskanals erreicht. Dabei wird die Verfügbarkeit des Systems erhöht, da ein Ausfall der Businfrastruktur (Hub-Modul 16) nicht zum Ausfall des Systems führt. Die Kommunikation erfolgt in diesem Kontext zweikanalig über die beiden Hubs 16. Jeder Kommunikationsauftrag wird durch den Requester (CPU 14) parallel an Kanal 1 (P1) und Kanal 2 (P2) gesendet. Der Responder (im Beispiel das rechte Modul 1) empfängt den Auftrag ebenfalls an beiden Ports P1, P2 und sendet die Antwort (Response) parallel an beiden Kanälen (Ports P1, P2) zurück. Der Requester 14 empfängt die Response ebenfalls an beiden Kanälen P1 und P2. Über dieses Verfahren kann der Ausfall eines Kanals rückwirkungsfrei überbrückt werden. Ferner kann in dieser Variante ein Hub-Modul 16 im laufenden Betrieb getauscht werden, ohne dass die Kommunikation unterbrochen wird.
- "Dual-Bus-System"
   Grundsätzlich können die zwei physikalischen Kanäle als eigenständige / autarke Bussysteme genutzt werden. In der Regel stehen sich zwei unterschiedliche Anforderungen an ein Kommunikationssystem gegenüber:
   - schnelle deterministische Zugriffe mit kurzen Reaktionszeiten,
   - relativ langsame Kommunikation, jedoch in der Regel große Datenmengen.
   Werden beide Funktionalitäten über einen Kanal realisiert, kommt es zu gegenseitigen Verkopplungen (in der Regel zeitlicher Natur). Diese Verkopplungen können verhindert werden, indem die Funktionalitäten über unterschiedliche autarke Kanäle (Kommunikationssysteme) realisiert werden.
   In dieser Option "Dual-Bus-System" können beide Kommunikationskanäle völlig autark genutzt werden, z.B. Kanal 1 für deterministische Übertragung und Kanal 2 für zeitunkritische Kommunikation.
- "Highspeed Slave"
   Die Redundierung des physikalischen Kommunikationskanals kann auch zur Erhöhung der Bandbreite genutzt werden, d.h. der Busmaster schickt ein Telegramm 11 über zwei Ports P1, P2. Dabei wird das Telegramm 11 nicht redundant übertragen. Eine Hälfte des Telegramms 12 wird über Port P1 übertragen, die andere Hälfte 13 über Port P2. Die Kennzeichnung eines gesplitteten Telegramms erfolgt über einen speziellen Startdelimiter. Damit wird prinzipiell eine Verdopplung der Bandbreite erreicht. Entsprechende Telegramme müssen auf der Empfängerseite nach dem identischen Algorithmus wieder zusammengesetzt werden. Der Algorithmus kann beispielsweise folgendermaßen aussehen: Über Port P1 werden alle ungeradzahligen Bytes übertragen und über Port P2 alle geradzahligen Bytes.

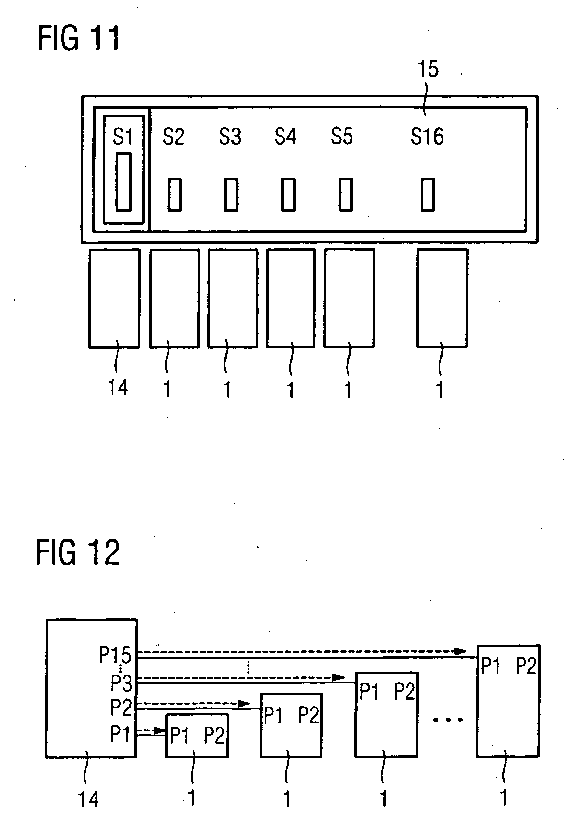

Fig 11 zeigt eine Darstellung der Systemtopologie eines erfindungsgemäßen Kommunikationssystems in einem Backplane-Aufbau mit einem "Highspeed Master". Dieser "Highspeed Master" ist die Zentraleinheit / CPU 14, die mehrere Ports aufweist, wobei an jeden Port ein Modul 1 angeschlossen ist. Der I/O-Transfer erfolgt im Regelfall zyklisch innerhalb eines definierten Zeitrasters und wird sequentiell zu jedem Modul 1 initiiert.

Fig 12 zeigt eine Darstellung der Kommunikationstopologie des Kommunikationssystems aus Fig 11. Jedes Modul 1 ist mit seinem Port P1 an einen Port des "Highspeed Masters", der Zentraleinheit / CPU 14, angeschlossen. Jedes Modul 1 wird also gewissermaßen über einen eigenständigen Bus angesprochen, d.h. in dieser Option erfolgt eine vollständige Parallelisierung des I/O-Transfers - die I/O-Module 1 werden gleichzeitig angesprochen, was bei zehn Modulen 1 in der Regel zu einer Verzehnfachung der zur Verfügung stehenden Bandbreite führt.

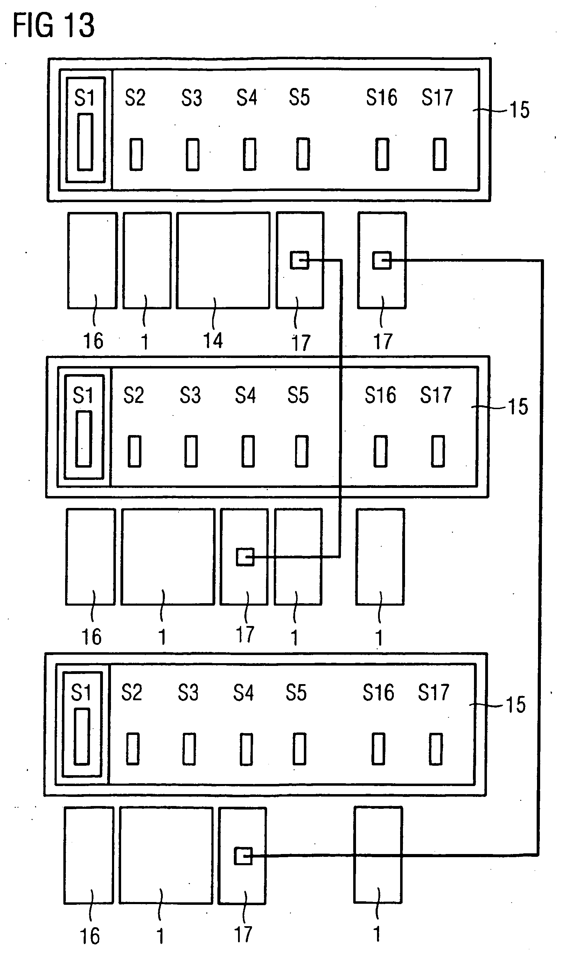

Fig 13 zeigt eine Darstellung der Systemtopologie eines erfindungsgemäßen Kommunikationssystems in einer um zwei Trägersysteme 15 erweiterten Ausführungsform. Diese Erweiterung erfolgt einfach durch Zustecken eines Interface-Moduls 17, an das über ein weiteres Interface-Modul 17 auf einem weiteren Trägersystem 15 ein weiterer Hub 16 angeschlossen ist, an den nun wiederum weitere Module 1 angeschlossen werden können.

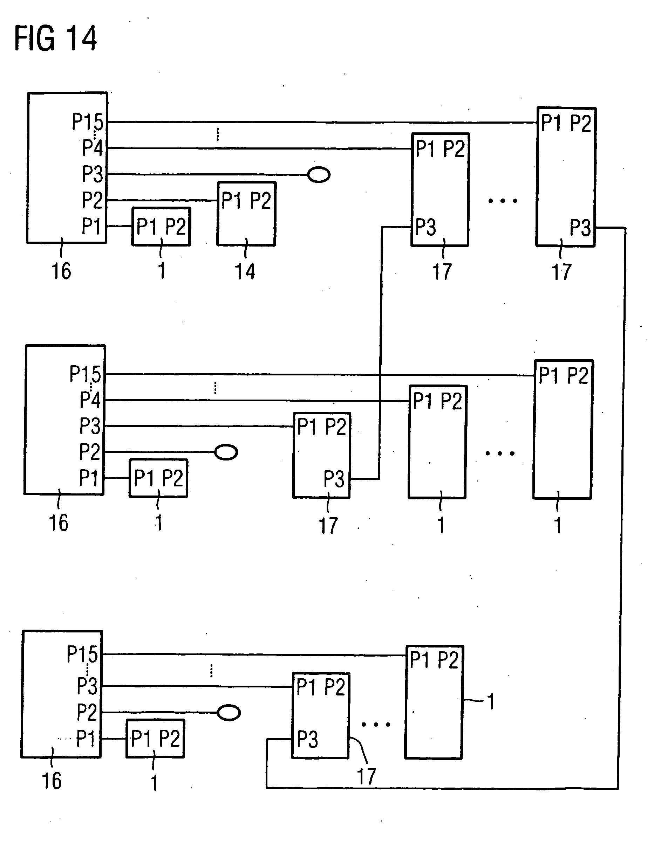

Fig 14 zeigt eine Darstellung der Kommunikationstopologie des Kommunikationssystems aus Fig 13. Durch Zustecken einer Komponente, eines Interface-Moduls 17, kann das System um ein bzw. mehrere Trägersysteme 15 mit n Modulen 1 bzw. Steckplätzen erweitert werden. Dabei erfolgt die Adressierung der Module 1 beispielsweise über die Konvention (Rack.Slot), wobei die Racks, die Trägersysteme 15, im Beispiel von oben nach unten mit Rack0, Rack1, Rack2 durchnumeriert werden können und Slot die Nummer des Steckplatzes im jeweiligen Rack angibt. So lautet z.B. die Adresse des mittleren Hub-Moduls 16 (1.1), während die Adresse des unteren Interface-Moduls 17 (2.4) lautet.

Zusammenfassend betrifft die Erfindung ein Modul zur Erweiterung eines Zentralmoduls eines Automatisierungssystems, wobei der Datentransfer zwischen Modul und Zentralmodul mittels eines seriellen Kommunikationssystems mit Punkt-zu-Punkt-Verbindungen in einem Daisy-Chain- oder einem Backplane-Aufbau erfolgt und wobei das Modul in einer Bitübertragungsschicht hierfür mindestens zwei Sender und mindestens zwei Empfänger aufweist. Die Erfindung betrifft ferner ein Kommunikationssystem mit mindestens einem solchen Modul und einem Zentralmodul. Der Erfindung liegt die Aufgabe zugrunde, ein Modul für ein Kommunikationssystem innerhalb eines Automatisierungssystems anzugeben, das flexibel und einfach an das jeweilige Einsatzfeld angepasst werden kann. Der Erfindung liegt ferner die Aufgabe zugrunde, ein flexibles und skalierbares Kommunikationssystem für den Datentransfer zwischen einem Zentralmodul / einer CPU und zumindest einem Modul im Sinne einer modularen Erweiterung des Zentralmoduls / der CPU anzugeben. Diese Aufgabe wird bei einem Modul der eingangs genannten Art dadurch gelöst, dass die Konfiguration der Bitübertragungsschicht zur Anpassung an ein vorgebbares Einsatzfeld des Moduls, insbesondere bezüglich Geschwindigkeit, Verfügbarkeit und/oder Erweiterbarkeit, parametrierbar ist.

## Patentansprüche

1. Modul (1) zur Erweiterung eines Zentralmoduls (14) eines Automatisierungssystems, **dadurch gekennzeichnet, dass** der Datentransfer zwischen Modul (1) und Zentralmodul (14) für serielle Kommunikation mit Punkt-zu-Punkt-Verbindungen in einem Daisy-Chain- oder für ein paralleles Bussystem im Sinne eines Backplane-Aufbaus einstellbar ist und wobei das Modul (1) in einer Bitübertragungsschicht hierfür mindestens zwei Sender (3) und mindestens zwei Empfänger (2) aufweist, wobei die Konfiguration der Bitübertragungsschicht zur Anpassung an ein vorgebbares Einsatzfeld des Moduls (1), insbesondere bezüglich Geschwindigkeit, Verfügbarkeit und/oder Erweiterbarkeit, parametrierbar ist.

2. Modul nach Anspruch 1,
wobei das Modul (1) Mittel zur Parametrierung der Konfiguration der Bitübertragungsschicht über Hardware-Einstellungen aufweist.

3. Modul nach Anspruch 1 oder 2,
wobei das Modul (1) Mittel zur Parametrierung der Konfiguration der Bitübertragungsschicht über Software-Einstellungen aufweist.

4. Modul nach einem der vorhergehenden Ansprüche,
wobei das Modul (1) Mittel zur automatischen Erkennung der Topologievariante Daisy-Chain- oder Backplane-Aufbau und entsprechender Parametrierung der Konfiguration der Bitübertragungsschicht aufweist.

5. Kommunikationssystem eines Automatisierungssystems mit einem durch mindestens ein Modul (1) erweitertes Zentralmodul (14), wobei der Datentransfer zwischen Modul (1) und Zentralmodul (14) seriell mittels Punkt-zu-Punkt-Verbindungen in einem Daisy-Chain- oder im Sinne eines parallelen Bussystems im Sinne eines Backplane-Aufbaus erfolgt,
**dadurch gekennzeichnet,**
**dass** als Modul (1) ein Modul (1) nach einem der Ansprüche 1 bis 4 vorgesehen ist.

6. Kommunikationssystem nach Anspruch 5,
wobei das Kommunikationssystem zumindest einen Hub (16) aufweist.

7. Kommunikationssystem nach Anspruch 5 oder 6,
wobei das Kommunikationssystem zumindest ein Interface-Modul (17) zur Erweiterung des Kommunikationssystems aufweist.

## Claims

1. Module (1) for expanding a central module (14) of an automation system,
**characterised in that**
the data transfer between module (1) and central module (14) is adjustable for serial communication with point-to-point connections in a daisychain or for a parallel bus system in terms of a backplane layout and wherein the module (1) has, in a physical layer herefor, at least two transmitters (3) and at least two receivers (2), wherein the configuration of the physical layer can be parameterised in order to adapt it to a predefinable field of application of the module (1), in particular in terms of speed, availability and/or expandability.

2. Module according to claim 1,
wherein the module (1) has means for parameterising the configuration of the physical layer by way of hardware settings.

3. Module according to claim 1 or 2,
wherein the module (1) has means for parameterising the configuration of the physical layer by way of software settings.

4. Module according to one of the preceding claims,
wherein the module (1) has means for automatically detecting the topology variant daisychain or backplane layout and for appropriately parameterising the configuration of the physical layer.

5. Communication system of an automation system having a central module (14) expanded by at least one module (1),
wherein the data transfer between module (1) and central module (14) is accomplished serially by means of point-to-point connections in a daisychain or in terms of a parallel bus system in a backplane layout,
**characterised in that**
a module (1) according to one of claims 1 to 4 is provided as the module (1).

6. Communication system according to claim 5,
wherein the communication system has at least one hub (16).

7. Communication system according to claim 5 or 6,
wherein the communication system has at least one interface module (17) for expanding the communication system.

## Revendications

1. Module ( 1 ) d'extension d'un module ( 14 ) central d'un système d'automatisation,
**caractérisé**
**en ce que** le transfert de données entre le module ( 1 ) et le module ( 14 ) central peut être réglé pour une communication séquentielle avec des liaisons point à point dans un système de bus en marguerite ou pour un système de bus parallèle au sens d'une structure de raccordement arrière et dans lequel le module ( 1 ) a dans une couche de transmission de bit à cet effet au moins deux émetteurs ( 3 ) et au moins deux récepteurs ( 2 ),
dans lequel la configuration de la couche de transmission de bit peut, pour l'adaptation à un champ d'utilisation pouvant être prescrit du module ( 1 ) notamment concernant la vitesse, la disponibilité et/ou la possibilité d'extension, être paramétrée.

2. Module suivant la revendication 1,
dans lequel le module ( 1 ) a des moyens de paramétrisation de la configuration de la couche de transmission de bit par des réglages en matériel.

3. Module suivant la revendication 1 ou 2,
dans lequel le module ( 1 ) a des moyens de paramétrisation de la configuration de la couche de transmission de bit par des réglages en logiciel.

4. Module suivant l'une des revendications précédentes,
dans lequel le module ( 1 ) a des moyens de détection automatique des variantes de topologie de structure en marguerite ou de raccordement arrière et une paramétrisation correspondante de la configuration de la couche de transmission de bit.

5. Système de communication d'un système d'automatisation, comprenant un module ( 14 ) central étendu par au moins un module ( 1 ), le transfert de données entre le module ( 1 ) et le module ( 14 ) central s'effectuant séquentiellement au moyen de liaisons point à point dans un système de bus en marguerite ou au sens d'un système de bus parallèle au sens d'une structure de raccordement arrière,
**caractérisé**
**en ce qu'**il est prévu comme module ( 1 ) un module ( 1 ) suivant l'une des revendications 1 à 4.

6. Système de communication suivant la revendication 5,
dans lequel le système de communication a au moins une station pivot (16).

7. Système de communication suivant la revendication 5 ou 6,
dans lequel le système de communication a au moins un module ( 17 ) d'interface pour l'extension du système de communication.
